Europäisches Patentamt

European Patent Office

Office européen des brevets

(11) Veröffentlichungsnummer: **0 402 581**

**A2**

## (12) EUROPÄISCHE PATENTANMELDUNG

(21) Anmeldenummer: **90105429.6**

(51) Int. Cl.⁵: $G02B\ 6/38$

(22) Anmeldetag: **22.03.90**

(30) Priorität: **15.06.89 DE 3919532**

(43) Veröffentlichungstag der Anmeldung:
**19.12.90 Patentblatt 90/51**

(84) Benannte Vertragsstaaten:
**AT BE CH FR GB IT LI NL**

(71) Anmelder: **ANT Nachrichtentechnik GmbH**
**Gerberstrasse 33**
**D-7150 Backnang(DE)**

(72) Erfinder: **Schmidt, Bernhard**
**Rehfeld 8**
**D-5206 Neunkirchen 1(DE)**

(54) **Verfahren zum Zentrieren und Fixieren eines Lichtwellenleiters in einer Hülse, Hülse mit Lichtwellenleiter und Vorrichtung zum Zentrieren und Fixieren eines Lichtwellenleiters in einer Hülse.**

(57) Es ist bekannt, Lichtwellenleiter in einem Kernteil aus duktilem Material zu fixieren und zu zentrieren. Zur Fixierung wird dazu zunächst ein ringförmiger Stempel verwendet, mit dem ein zur Hülsenachse symmetrischer Druck auf die Stirnseite des Kernteils ausgeübt wird. Zur Justierung wird in einem weiteren Arbeitsgang ein unsymmetrischer Druck auf die Stirnseite ausgeübt, wobei als Stauchwerkzeug einzelne Stempel dienen. Eine Zusammenfassung dieser Schritte zu einem Arbeitsgang und eine stabilere Fixierung des Lichtwellenleiters wird angestrebt.

Durch die Verwendung eines Stauchstempels, der aus einzelnen Nadeln (5) besteht, die unabhängig voneinander bewegt werden können, ist es möglich, einen Lichtwellenleiter (1) in einem Körper (2) aus duktilem Material, der eine Bohrung (3) aufweist, zu fixieren und gleichzeitig zu zentrieren.

Lichtwellenleiterverbindungen, insbesondere für Monomode-Fasern.

Fig. 1

EP 0 402 581 A2

## Verfahren zum Zentrieren und Fixieren eines Lichtwellenleiters in einer Hülse, Hülse mit Lichtwellenleiter und Vorrichtung zum Zentrieren und Fixieren eines Lichtwellenleiters in einer Hülse

Die Erfindung betrifft ein Verfahren zum Zentrieren und Fixieren eines Lichtwellenleiters in einer Hülse gemäß dem Oberbegriff des Patentanspruches 1, eine Hülse mit Lichtwellenleiter gemäß dem Oberbegriff des Patentanspruches 3 und eine Vorrichtung zum Zentrieren und Fixieren eines Lichtwellenleiters in einer Hülse gemäß dem Oberbegriff des Patentanspruches 4.

Aus der EP 94 906 B1 ist es bekannt, eine Lichtleitfaser in einem Lichtleiterendstück zu zentrieren und fixieren, wobei die von der Isolation befreite Faser in einen Zentrierzylinder geschoben wird. Der Zentrierzylinder besteht aus einem hohlzylindrischen Außenteil aus relativ hartem Material, welches wenigstens im Bereich der Stirnseite mit einem Kernteil aus plastisch verformbarem Material gefüllt ist. Das Kernteil weist eine axiale Bohrung zur Aufnahme des Faserendes auf. Ein ringförmiges Stauchwerkzeug wird derart gegen die Stirnseite des Kernteils gepreßt, daß das Stauchwerkzeug die Bohrung mit der Faser konzentrisch umgibt und daß sich das Material um die Faser plastisch verformt, wobei das Faserende zentrisch zum Außenmantel des Zentrierzylinders fixiert wird.

Die Zentrierung und Fixierung der Faser erfolgt also durch einen symmetrischen Druck auf die Stirnseite eines duktilen Kernteils. Bei diesem Verfahren können geringe Restabweichungen nicht vermieden werden. Diese Restabweichungen können sich aber insbesondere bei der Fixierung von Monomode-Fasern negativ auswirken. Zum Beispiel kann es zu Lichtverlusten kommen, wenn zwei auf diese Weise fixierte Monomode-Fasern in einer die beiden Zentrierzylinder aufnehmenden Nut aufeinander fixiert werden.

Aus der DE 34 42 822 C2 geht ein Verfahren hervor, mit dem eine bereits fixierte Lichtleitfaser genau in der Hülse zentriert werden kann. Dazu wird auf den verformbaren Kernteil ein bezüglich der Hülsenachse unsymmetrischer Druck ausgeübt. Durch diesen Druck wird eine Radialverschiebung bewirkt und der Lichtwellenleiterendabschnitt wird auf die Hülsenachse feinjustiert.

Auch aus der EP 213 067 A2 ist es bekannt, die Lichtleitfaser durch exzentrischen Druck mit einem in axialer Richtung wirkenden Werkzeug zu zentrieren. Zunächst wird die Lichtleitfaser mit einem ringförmigen Stauchwerkzeug fixiert und vorzentriert und dann mit einem segmentförmigen Stauchwerkzeug zentriert.

Die Fixierung und Zentrierung des Lichtwellenleiters in der Hülse erfolgt dann also in zwei Arbeitsschritten. Zunächst wird mit einem ringförmigen Stauchwerkzeug fixiert. Dann wird mit einem weiteren Stauchwerkzeug unsymmetrischer Druck ausgeübt und dadurch feinjustiert. Dieses Vorgehen weist nicht nur den Nachteil auf, daß zwei Arbeitsgänge benötigt werden, sondern auch, daß der Lichtwellenleiter durch den Druck auf das duktile Kernteil mit einem ringförmigen Stauchwerkzeug nur in einem sehr kurzen Abschnitt des Kernteils an der Stirnseite fixiert ist. Dies läßt sich dadurch ausgleichen, daß der Lichtwellenleiter im weiteren Verlauf in der Bohrung verklebt wird. Eine Feinjustierung ist jedoch nur so lange möglich, wie dieser Kleber noch nicht trocken ist. Die geringe Eindringtiefe des ringförmigen Stauchwerkzeuges und somit der kleine Bereich, in dem die Faser fixiert ist, wirkt sich insbesondere dann nachteilig aus, wenn die Hülse mit dem Kernteil aus deformierbarem Material und dem Lichtwellenleiter nach der Fixierung des Lichtwellenleiters abgeschliffen werden soll. Dies ist notwendig, um eine plane Stirnfläche mit plan darin eingebettetem Lichtwellenleiter zu erhalten. Ist der Lichtwellenleiter jedoch nur über einen geringen Bereich an der Stirnseite fixiert, so besteht die Gefahr, daß man durch das Abschleifen die Fixierung zerstört.

Aufgabe der vorliegenden Erfindung ist es daher, ein Verfahren anzugeben, mit dem ein Lichtwellenleiter in einer Hülse in einem Arbeitsgang genau auf die Hülsenachse einjustiert und dort fixiert werden kann und bei dem die Faser über einen weiten Bereich fixiert ist. Es ist außerdem Aufgabe der Erfindung, eine Vorrichtung anzugeben, mit der obiges Verfahren durchgeführt werden kann und eine Hülse mit einem justierten und fixierten Lichtwellenleiter anzugeben.

Die Aufgabe wird bezüglich des Verfahrens durch ein Verfahren mit den Merkmalen des Patentanspruches 1 gelöst. Eine Weiterbildung des Verfahrens ist in Patentanspruch 2 angegeben. Bezüglich der Vorrichtung zum Zentrieren und Fixieren eines Lichtwellenleiters in einer Hülse wird die Aufgabe mit einer Vorrichtung mit den Merkmalen des Patentanspruches 4 gelöst. Eine Weiterbildung ist in Patentanspruch 5 angegeben. Eine Hülse mit Lichtwellenleiter, die die Aufgabe löst, ist in Patentanspruch 3 angegeben.

Durch die erfindungsgemäße Anwendung von Nadeln als Stauchwerkzeug, die eine große Eindringtiefe in den duktilen Körper aufweisen, wird ein fester Sitz des Lichtwellenleiters in der Hülse erreicht. Dieser feste Sitz resultiert daraus, daß durch die große Eindringtiefe die Faser über einen weiten Bereich fixiert ist. Die Stirnseite der Hülse mit dem Körper aus verformbarem Material und dem Lichtwellenleiter kann abgeschliffen werden, ohne daß sich der Sitz der Faser lockert.

Es ist außerdem möglich, mit dem erfindungsgemäßen Verfahren ein Fixieren und Zentrieren des Lichtwellenleiters in der Hülse in einem Arbeitsgang vorzunehmen. Dies wird insbesondere dadurch ermöglicht, daß die als Stauchwerkzeug dienenden Nadeln sowohl miteinander als auch voneinander unabhängig betätigt werden können. Es können also beispielsweise zunächst, um den Lichtwellenleiter zu fixieren, alle Nadeln gleichmäßig auf die Stirnseite des verformbaren Körpers drücken, um dann zur Zentrierung einzelne Nadeln noch tiefer in den Körper aus duktilem Material eindringen zu lassen. Durch eine leicht kegelförmige Ausgestaltung der Nadeln sind somit Fixierung und Justierung zu erreichen, ohne die Nadeln erneut zur Zentrierung an neuen Einstichstellen anzusetzen. Die große Eindringtiefe der Nadeln wird insbesondere dadurch gewährleistet, daß der Öffnungswinkel des Kegels sehr gering ist.

Weiter ist es von Vorteil, daß die Fixierung kleberfrei geschehen kann. Da nur ein Arbeitsgang benötigt wird, kann die Fixierung und Zentrierung des Lichtwellenleiters in der Hülse schnell vorgenommen werden.

Bei der erfindungsgemäßen Vorrichtung ist es insbesondere von Vorteil, daß nur ein Stauchwerkzeug in Form von einzelnen Nadeln benötigt wird.

Die erfindungsgemäße Hülse mit Lichtwellenleiter kann sehr unterschiedliches Aussehen haben. Es ist dabei nur notwendig, daß sie teilweise, zumindest an der Stirnseite, aus einem Körper aus duktilem Material besteht. Dieser Körper kann sowohl von einer festen äußeren Hülle umgeben sein als auch in axialer Richtung in eine Hülle aus festerem Material münden. Beide Ausführungsmöglichkeiten sind bei Steckern sinnvoll.

Anhand der Zeichnungen wird ein Ausführungsbeispiel der Erfindung erläutert. Es zeigen:

Figur 1 einen Querschnitt durch einen Körper aus verformbarem Material mit fixiertem und justiertem Lichtwellenleiter sowie Stauchwerkzeug,

Figur 2 eine Aufsicht auf die Stirnseite eines Körpers aus duktilem Material mit Lichtwellenleiter und sichtbarer Nadelprägung.

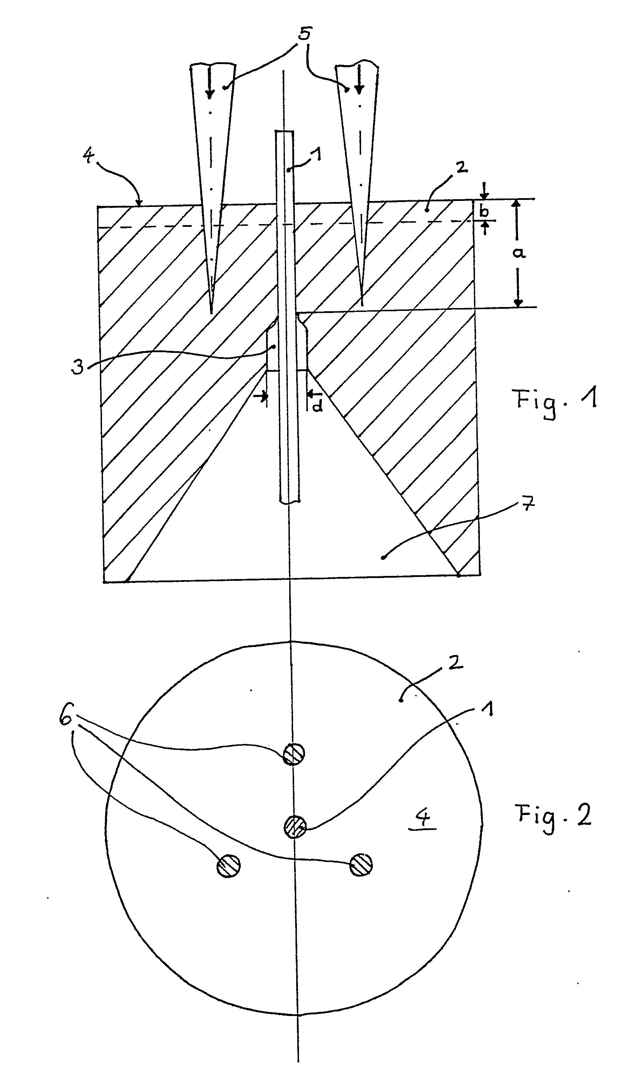

In Figur 1 ist ein Querschnitt durch einen Körper 2 aus duktilem Material dargestellt. Der Körper 2 kann beispielsweise aus Messing oder Neusilber bestehen. Er weist eine Bohrung 3 auf, die mit der Hülsenachse einer zylindrischen Hülse, deren Teil der Körper 2 ist, zusammenfällt. Die Bohrung 3 reicht von der Stirnseite 4 des Körpers 2 bis zu einer Stelle, an der sie sich in eine kegelförmige Öffnung 7 erweitert. Durch diese kegelförmige Öffnung 7, die in die Bohrung 3 mündet, ist es besonders einfach, einen Lichtwellenleiter 1 in die Bohrung 3 einzuführen. Der Lichtwellenleiter 1 wird derart in die Bohrung 3 eingeschoben, daß sein Ende über die Stirnseite 4 etwas hinausragt. Zur Fixierung und Justierung des Lichtwellenleiters wird dann ein Stauchwerkzeug, das aus einzelnen Nadeln 5 besteht, auf die Stirnseite 4 des Körpers 2 gedrückt. Die Nadeln 5 sind dabei auf einem Kreis angeordnet, dessen Kreismittelpunkt mit dem Mittelpunkt der Bohrung 3 zusammenfällt. Durch Krafteinwirkung in der in Figur 1 angegebenen Richtung dringen die Nadeln 5 in den Körper 2 ein. Durch das Eindringen der Nadeln 5 wird die Bohrung 3 deformiert und der Lichtwellenleiter 1 wird fixiert und justiert. Die Klemmlänge a, also die Länge, auf der der Lichtwellenleiter 1 fixiert ist, ist sehr groß. Sie wird durch die Eindringtiefe der Nadeln 5 bestimmt. Zur Justierung ist es dabei möglich, die Nadeln 5 unabhängig voneinander, d.h. ungleichmäßig tief, eindringen zu lassen. Ein Abschleifen der Stirnseite des Körpers 2 mit Lichtwellenleiter 1 nachdem die Nadeln entfernt wurden um den Schleifabtrag b, stellt keine Verminderung der Haltbarkeit der Fixierung dar.

Die Hülse mit Lichtwellenleiter 1 weist auf der Stirnseite des Körpers 2 durch Nadeln 5 hervorgerufene Vertiefungen 6 mit großer Eindringtiefe auf. Die Stirnseite 4 des Körpers 2 ist in Figur 2 dargestellt.

Eine Vorrichtung zum Zentrieren und Fixieren eines Lichtwellenleiters weist also als Stauchwerkzeug mindestens drei Nadeln 5 auf, die parallel zueinander ausgerichtet sind und auf einem Kreis verteilt sind. Die Nadeln müssen derart auf einem Kreis verteilt sein, daß ein Justieren des Lichtwellenleiters in jeder transversalen Richtung möglich ist. Um dies zu erreichen, sind mindestens drei Nadeln notwendig. Es können aber auch vier, fünf oder mehr Nadeln eingesetzt werden. Die Nadeln müssen unabhängig voneinander betätigt werden können, um eine Justierung erreichen zu können. Ein gemeinsames Betätigen der Nadeln zum Fixieren des Lichtwellenleiters ist sinnvoll. Die Nadeln können sehr unterschiedliches Aussehen aufweisen. Sie können beispielsweise im Querschnitt rund, drei- oder sechseckig sein und eine kegelstumpf- oder halbkugelförmige Spitze aufweisen.

**Ansprüche**

1. Verfahren zum Zentrieren und Fixieren eines Lichtwellenleiters (1) in einer Hülse, die teilweise, zumindest an einer Stirnseite aus einem Körper (2) aus duktilem Material besteht, wobei der Lichtwellenleiter (1) in diesen Körper (2), der eine zur Hülsenachse koaxiale Bohrung (3) aufweist, geschoben wird und wobei mit einem Stauchwerkzeug Druck auf die Stirnseite (4) des Körpers (2) ausgeübt wird,

dadurch gekennzeichnet,
daß als Stauchwerkzeug Nadeln (5) eingesetzt werden, die eine hohe Eindringtiefe in den Körper (2) ermöglichen und die unabhängig voneinander betätigt werden können, und daß der Lichtwellenleiter (1) in der Hülse fixiert und zentriert wird.

2. Verfahren nach Anspruch 1, dadurch gekennzeichnet, daß die Stirnseite (4) der Hülse mit Lichtwellenleiter (1) nach dem Zentrieren und Fixieren abgeschliffen wird.

3. Verfahren nach Anspruch 1, dadurch gekennzeichnet, daß der Lichtwellenleiter (1) nach dem Zentrieren und Fixieren bündig zur Stirnseite (4) der Hülse abgeschnitten wird.

4. Vorrichtung zum Zentrieren und Fixieren eines Lichtwellenleiters (1) in einer Hülse zur Durchführung eines Verfahrens nach Anspruch 1, wobei ein Stauchwerkzeug vorgesehen ist, dadurch gekennzeichnet, daß das Stauchwerkzeug mehrere Nadeln (5) aufweist, die auf einem Kreis verteilt sind, und daß die Nadeln unabhängig voneinander betätigt werden können.

5. Vorrichtung nach Anspruch 4, dadurch gekennzeichnet, daß die Nadeln (5) kegelartig mit einem Öffnungswinkel von ungefähr 15° ausgebildet sind.

6. Vorrichtung nach einem der Ansprüche 4 oder 5, dadurch gekennzeichnet, daß die Nadeln (5) zueinander parallel ausgerichtet sind.

7. Vorrichtung nach einem der Ansprüche 4 bis 6, dadurch gekennzeichnet, daß mindestens drei Nadeln (5) vorgesehen sind.

Fig. 1

Fig. 2